Europäisches Patentamt

European Patent Office

Office européen des brevets

(11) Veröffentlichungsnummer: **0 625 558 A1**

# (12) EUROPÄISCHE PATENTANMELDUNG

(21) Anmeldenummer: **94106971.8**

(22) Anmeldetag: **04.05.94**

(51) Int. Cl.5: **C09J 175/00**, C09J 109/04,
C08G 18/10, C09J 7/00,
//(C09J175/00,109:04),
(C09J109/04,175:00)

(30) Priorität: **17.05.93 DE 4316427**

(43) Veröffentlichungstag der Anmeldung:
**23.11.94 Patentblatt 94/47**

(84) Benannte Vertragsstaaten:
**DE ES FR GB IT**

(71) Anmelder: **BAYER AG**

**D-51368 Leverkusen (DE)**

(72) Erfinder: **Hombach, Rudolf, Dr.**
**Johann-Janssen-Strasse 24**
**D-51375 Leverkusen (DE)**
Erfinder: **Witkowski, Reiner, Dr.**
**Pausmühlenkamp 15**
**D-45357 Essen (DE)**
Erfinder: **Ganster, Otto, Dr.**
**Droste-Hülshoff-Strasse 5**
**D-51519 Odenthal (DE)**
Erfinder: **Arend, Günter, Dr.**
**Claudiusstrasse 42**
**D-41540 Dormagen (DE)**

(54) **Mischungen aus wässrigen Polymerdispersionen.**

(57) Als Klebstoff geeignete Mischungen wäßriger Polymerdispersionen enthalten mindestens eine Dispersion eines Nitrilkautschuks (Polymer A), mindestens eine Dispersion eines Polyurethans/Polyharnstoffs (Polymer B).

EP 0 625 558 A1

Die vorliegende Erfindung betrifft Mischungen aus wäßrigen Polymerdispersionen sowie ein Verfahren zum Verkleben von Substraten mit diesen Mischungen.

In der Transportmittelindustrie, insbesondere im Automobilbau wird ein ständig wachsender Anteil der Fahrzeuginneneinrichtungen, wie Seitenteile, Armaturentafeln, Abdeckungen und Ablagen aus PVC-Folienkaschierten Holzfaserformstoffteilen und in neuerer Zeit aus thermoplastischen Kunststoffen gefertigt. Beim Kaschierprozeß (Vakuum-Tiefziehverfahren) treten aufgrund der stellenweise hohen Dehnung der Kaschierfolie z.T. extrem hohe Rückstellkräfte auf, die vom Klebstoff auf das Substrat übertragen werden müssen. Unter extremen klimatischen Bedingungen muß ein kaschiertes Innenteil hohen Temperaturen über einen langen Zeitraum ohne Delaminierung widerstehen können. Ein weiteres Problem bei der Herstellung kaschierter Innenteile ist die Weichmachermigration aus dem PVC-Folienmaterial, die die Festigkeit der Klebung mit der Zeit deutlich herabsetzen kann. Das hohe Eigenschaftsprofil für derartige Klebeverbindungen erreichten bisher nur lösungsmittelhaltige Zweikomponenten-PU-Systeme.

Hierfür werden aus Gründen des Umweltschutzes, der Arbeitshygiene und der Verarbeitungssicherheit zunehmend wäßrige Polymerdispersionen, insbesondere Polyurethandispersionen eingesetzt.

Klebstoffzusammensetzungen basierend auf wäßrigen Polymerdispersionen sind hinlänglich bekannt. Homo- und Copolymere von Acryl- und Vinylacetatmonomeren werden in breitem Umfang für Klebstoffzusammensetzungen verwendet. Diese Latices werden mit NCO-reaktiven Monomeren modifiziert, um hochwertige, vernetzbare Klebstoffe oder Überzüge zu erhalten. In weit geringeren Anteil werden Polymerdispersionen basierend auf Butadien AcrylnitrilKautschuk-Dispersionen eingesetzt, da diese für sich allein nicht als Thermoaktivierklebstoffe verwendet werden können.

Jpn. Kokai Tokkyo Koho 79 08 686 beschreibt Mischungen aus wäßrigen Nitrilkautschuklatices bzw. Vinylidenchloridlatices mit wäßrigen Urethanharzen zur Herstellung von Sandwichverbunden mittels Hochfrequenzverklebung. Der Anteil des Polyurethanharzes ist dabei relativ hoch. Die erreichten Wärmefestigkeiten der Verklebungen liegen bei nur 80 °C.

Jpn. Kokai Tokkyo Koho 58 87 173 beschreibt die Herstellung von Mischungen aus carboxylierten SBR-bzw. NBR-Latices mit emulgierbaren Polyisocyanaten als Klebstoffe mit sehr guter Wasserbeständigkeit. Es müssen dabei Fügebedingungen eingehalten werden (120 s Preßzeit, 120 °C Preßtemperatur), die für industrielle Laminierprozesse ungünstig sind und bei verschiedenen Kaschiermaterialien zu Problemen führt. Über die Verklebung von weichmacherhaltigen Materialien wird nichts ausgesagt.

EP 76 888 beschreibt Mischungen verschiedener Latextypen (Polymethacrylat, Polyurethan, Poly-(Butadien-Acrylnitril)) zum Binden von Polymerfasern bei 130 °C - 150 °C. Eine Verwendung als Klebstoff mit niedriger Aktiviertemperatur ist mit diesen Mischungen nicht möglich.

Jpn. Kokai Tokkyo Koho 79 95 640 beschreibt Klebstoffe aus Mischungen von Butadien-Acrylnitril-AcrylsäureTerpolymer-Latices und Polyurethanemulsionen, die als Klebstoffe für Metalle bzw. Metallfolien geeignet sein sollen. Die Verklebung von weichmacherhaltigen Thermoplastfolien mit derartigen Mischungen wird nicht erwähnt.

EP 0 381 349 beschreibt die Herstellung eines Haftklebstofffilms aufgebaut aus einem Polyurethanfilm und einer Haftklebeschicht aus einem aus Lösung aufgetragenen Nitrilkautschuk. Die Eignung als Klebstoff für PVC-Materialien wird zwar generell beschrieben, die Schälfestigkeiten und Wärmebeständigkeiten einer solchen Klebung sind für hochbeanspruchte Verklebungen zu gering.

EP 0 372 477 beschreibt die Herstellung spezieller Nitrilkautschuke, die aus organischer Lösung aufgetragen besondere Klebstoffeigenschaften, wie Wasserbeständigkeit und Adhäsion aufweisen. Die Eignung der Polymerdispersionen, aus denen diese Kautschuke anfallen, als Klebstoffe wurde nicht untersucht. Hinweise auf die Mitverwendung von Polyurethan-/Polyharnstoffdispersionen finden sich nicht. Die Anwendung als Kaschierklebstoff wird nicht erwähnt.

Aufgabe der vorliegenden Erfindung ist es, Klebstoffe mit niedriger Aktivierungstemperatur, sehr guten Haftungsvermögen und hoher Wärmebeständigkeit zur Verfügung zu stellen, die in industriellen Laminier- und Kaschierprozessen bei der Verklebung von Textil-, Thermoplastfolien oder Holzfurnieren sowie zum Kleben von Leder mit unterschiedliche Sohlenmaterialien in der Schuhherstellung eingesetzt werden.

Gegenstand der vorliegenden Erfindung ist eine Mischung wäßriger Polymerdispersionen enthaltend:

A) eine 5 bis 70 Gew.-%, bevorzugt 10 bis 65 Gew.-%, besonders bevorzugt 15 bis 50 Gew.-% Feststoff enthaltende Dispersion eines Nitrilkautschuks (Dispersion A), dessen Feststoff eine Shore-A-Härte von 10 bis 70 aufweist, aus 80 bis 50 Gew.-%, bevorzugt 80 bis 60 Gew.-% Butadien und/oder Isopren, 20 bis 50 Gew.-%, bevorzugt 20 bis 40 Gew.-% Acrylnitril und/oder Methacrylnitril, 0 bis 10 Gew.-%, bevorzugt 0 bis 5 Gew.-% Styrol, $\alpha,\beta$-monoethylenisch ungesättigter Carbonsäuren und/oder deren Amide und/oder N-Methylolamide und/oder Derivate der Methylolamide,

B) eine 50 bis 70 Gew.-%, bevorzugt 10 bis 65 Gew.-%, besonders bevorzugt 15 bis 50 Gew.-% Feststoff enthaltende Dispersion eines Polyurethans und/oder Polyharnstoffes (Dispersion B), dessen Erweichungsbereich bei 40°C bis 120°C liegt, wobei das Mengenverhältnis der Dispersionen A:B im Bereich von 95:5 bis 5:95, bevorzugt 85:15 bis 15:85, besonders bevorzugt 70:30 bis 30:70, bezogen auf den Feststoffanteil der Dispersionen A+B liegt,

C) gegebenenfalls eine Polyisocyanatverbindung mit wenigstens zwei Isocyanatgruppen je Molekül, welche den Dispersionen zu 0,1 bis 20 Gew.-Teilen, bevorzugt 1 bis 10 Gew.-Teilen, bezogen auf 100 Gew.-Teile der Mischung der Dispersionen A und B, zugesetzt wird sowie

D) gegebenenfalls übliche Zusatzstoffe.

Zur Ermittlung der Erweichungstemperatur von Polymeren werden die auf einen Feststoffgehalt von 30 % eingestellten Dispersionen in Teflonschalen 3 Tage bei Raumtemperatur, 20 Stunden bei 65°C und 20 Minuten bei 130°C getrocknet. Die thermomechanische Analyse (TMA) wird mit dem TMA-7-Gerät (Perkin Elmer) unter Heliumatmosphäre durchgeführt. Geräteeinstellung:

- Durchmesser Penetrationssonde 0,89 mm
- Sondenlast 50 g
- Heizrate 5°/min
- Temperaturbereich -100 bis +120°C

Als Erweichungstemperatur gilt diejenige Temperatur, bei der die belastete Sonde deutlich in dem schmelzenden Polymerfilm eindringt. Dieser Vorgang äußert sich in einem deutlichen Knickpunkt in einer Abbildung, in der die prozentuale Eindringtiefe der Sonde gegen die Filmtemperatur aufgetragen wird.

Gegenüber den dem Stand der Technik entsprechenden Klebstofformulierungen auf Basis von Mischung aus Acrylat-, SBR-, Vinylacetat- oder auch Ethylenvinylacetatdispersionen mit Polyurethan-Polyharnstoffdispersionen zeichnen sich die erfindungsgemäßen Mischungen durch eine Reihe von Vorteilen aus Während sich mit Nitril-Kautschukdispersionen allein nach den beschriebenen Verfahren keine Verklebungen herstellen lassen, können schon mit geringen Anteilen einer Polyurethan-/Polyharnstoffdispersionen leistungsfähige Klebstoffe hergestellt werdend Der Anteil des Polyurethans in den Mischungen kann im Gegensatz zu den o.g. Systemen auf Basis Acrylat, SBR, PVAC, EVAC deutlich vermindert werden, ohne daß wesentliche Einbußen bezüglich Sofort-Schälfestigkeit, Endfestigkeit und Wärmebeständigkeit in Kauf genommen werden müssen. Dies führt zu preisgünstigen und überraschend leistungsfähigen Klebstoffsystemen mit hohen Sofort- und Endfestigkeiten und sehr guten Wärmebeständigkeiten.

Als Polymer B können anionische, kationische oder nicht ionisch modifizierte Polymere eingesetzt werden. Bevorzugt werden als unter 70°C filmbildende Dispersionen Polyurethandispersionen eingesetzt. Die Herstellung solcher PU-Dispersionen erfolgt vorzugsweise gemäß GB-PS 1 076 668, DT-PS 1 184 946, DT-AS 1 495 745, DT-OS 1 495 847, DT-OS 2 035 732, DT-OS 2 344 135, DT-OS 2 446 440, US-PS 3 479 310, US-PS 3 756 992, US-PS 3 905 929, EP 0 304 718, "Die angewandte Makromolekulare Chemie" 26, 1972, Seiten 85 bis 106 oder "Angewandte Chemie", 82, 1970, Seiten 53 bis 63.

Zur Herstellung der Polyurethane werden die an sich in der Polyurethanchemie bekannten Isocyanatkomponenten, höhermolekulare Polyhydroxyverbindungen (Polyhydroxypolyester, -ether und -carbonate) mit einem Molekulargewicht von 400 bis 10 000, sowie Kettenverlängerungsmittel mit mindestens zwei gegenüber Isocyanatgruppen reaktionsfähigen Wasserstoffatomen und vorzugsweise einem Molekulargewicht von 18 bis 399 eingesetzt. Weiterhin werden ionische Verbindungen eingesetzt, die neben mindestens einer gegenüber Isocyanatgruppen reaktiven Gruppe mindestens eine hydrophile Gruppe wie z.B. eine tertiäre oder quartäre Ammoniumgruppe, eine Carboxylat- oder Sulfonatgruppe oder eine in derartige Gruppen überführbare Gruppe aufweisen. Außerdem können nicht ionisch hydrophile Verbindungen eingebaut werden, die neben mindestens einer gegenüber Isocyanatgruppen reaktionsfähigen Gruppe innerhalb einer Polyetherkette endständig und/oder seitenständig angeordnete Ethylenoxideinheiten aufweisen Der Gehalt an ionischen Gruppen beträgt vorzugsweise zwischen 2 bis 200 mäq/100 g Polyurethan, bevorzugt 2 bis 100 mäq/100 g Polyurethan, der Gehalt an Ethylenoxideinheiten bezogen auf das Polyurethan beträgt 0 bis 25 Gew.-%, bevorzugt 0 bis 15 Gew.-%.

Außerdem können zur Herstellung der oben beschriebenen Dispersionen Hilfs- und Zusatzstoffe (Lösungsmittel, Neutralisationsmittel, Emulgatoren, Katalysatoren) verwendet werden.

Die Herstellung der Polyurethandispersionen kann entsprechend der Lehre der DE-A-1 495 745 und US-A-3 479 310 nach dem sog. "Acetonverfahren" gemäß der Lehre der DE-A-2 725 589, US-A-4 269 748, US-A-4 192 937 oder US-A-4 292 226 nach dem "Ketimin/Ketazin-Prozeß" und nach dem "Schmelzdispergierverfahren" gemäß der Lehre der DE-A-1 770 068, US-A-3 756 992, DE-A-2 637 690 oder auch entsprechend der Vorschrift der US-A-4 387 181 erfolgen.

Die erfindungsgemäß zu verwendenden Dispersionen B besitzen vorzugsweise einen Feststoffgehalt von 5 bis 70 Gew.-%, vorzugsweise von 15 bis 50 Gew.-%. Der mittlere Teilchendurchmesser liegt zwischen 20 und 800 nm.

Die erfindungsgemäß zu verwendenden Polyurethane B haben vorzugsweise NCO-reaktive Endgruppen, insbesondere Mercapto- und vor allem Hydroxyl- und Aminogruppen.

Die Dispersionen A werden entsprechend dem Stand der Technik nach den bekannten Methoden der Emulsionspolymerisation hergestellt. Vorzugsweise handelt es sich dabei um Polymere/Copolymere von $\alpha$-$\beta$-ungesättigten Monomeren und/oder Dienen gemäß US-A-3 939 013 und DE-A 2 014 385, DE-A-1 935 345, DE-A-1 935 348 und DE-A-1 935 349.

Bevorzugt werden genannt: Acrylsäure, Methacrylsäure, Itaconsäure, Maleinsäure, Butadien, Isopren, Acrylnitril, Acrylsäure-$C_1$-$C_8$-ester. Bevorzugt werden Polymere auf Basis von Butadien und Vinylgruppen enthaltende Verbindungen, vorzugsweise aliphatische eingesetzt. Besonders bevorzugt sind Polymere aus Butadien und Acrylnitril und/oder Methacrylnitril, wie sie beispielsweise beschrieben sind in: Houben Weyl, Methoden der org. Chemie, Band XIV/1 , S. 703 ff, Ullmanns Encyclopadie der technischen Chemie Bd. 13, S. 613 ff, Encyclopadie Polymer Sci. Engng 2, S. 558 ff oder aber in der DE-AS 2 347 755 bzw. DE-OS 3 118 200. Dabei sollten bei den Butadien-Acrylnitril/Methacrylnitril-Polymeren der Anteil an Butdadien mindestens 50 Gew.-%, vorzugsweise 55 bis 80 Gew.-% liegen.

Der Feststoffgehalt der erfindungsgemäß zu verwendenden Dispersionen A liegt im Bereich zwischen 5 und 70 Gew.-%, vorzugsweise zwischen 10 und 65 Gew.-%.

Das Mischungsverhältnis Dispersion A/Dispersion B beträgt 95:5 bis 5:95, insbesondere 85:15 bis 15:85, bevorzugt 70:30 bis 30:70 Gewichtsteile, bezogen auf Gewichtsteile Feststoff. Die Mischung der Dispersionen kann durch Zusammenmischen der fertiggestellten Dispersionen in den gewünschten Verhältnissen erfolgen. Dabei Können Rührer und Mischaggregate einfacher Bauart und Ausführung verwendet werden.

Bevorzugte Polyisocyanatverbindungen C sind Polyisocyanatzubereitungen aus aliphatischen und/oder aromatischen Polyisocyanaten, die durch eingebaute ionische und/oder nicht ionische Gruppen in Wasser emulgierbar sind siehe z.B. DE-A-35 21 618 ( = US-A-46 63 377).

Besonders bevorzugt sind die aus der DE-A-3 521 618 ( = US-A-4 663 377) bekannten dispergierbaren Polyisocyanatzubereitungen aus einem aliphatischen Polyisocyanat und einer die Dispergierbarkeit des Polyisocyanat gewährleistenden Menge eines Emulgators, wobei der Emulgator insbesondere das Umsetzungsprodukt eines aliphatischen Polyisocyanates mit einem ein- oder mehrwertigen, nichtionischen Polyalkylenether-Alkohol mit mindestens einer, mindestens 10 Ethylenoxideinheiten aufweisenden Polyetherkette enthält.

Das Polyisocyanat C wird der Mischung vorzugsweise auf folgende Weise zugefügt:

Vor der Verarbeitung wird eine ausgewogene Menge Polyisocyanat C in die Mischung der Dispersion A und B gegeben und die Klebstoffzusammensetzung ca. 1 Minute innig vermischt.

Werden die erfindungsgemäßen Dispersionsmischungen als Klebstoffe verwendet, können in der Klebstofftechnik üblicherweise verwendeten Hilfs- und Zusatzstoffe D mit verwendet werden, wie Verdikkungsmittel, Pigmente, Füllstoffe und Stabilisatoren.

Klebstoffzusammensetzungen auf Basis der erfindungsgemäßen Mischungen von A und B eignen sich besonders als Klebstoff für industrielle Thermokaschier- Laminierprozesse für die Beschichtung von diversen Trägersubstraten wie Holz, Metall oder Thermoplastkunststoffe mit Polymerfolien, Furnieren oder Textilien. Insbesondere bei Prozessen, bei denen es auf hohe Sofortschälfestigkeitswerte, hohe Endschälfestigkeit und hohe Wärmebeständigkeit der Verklebungen ankommt, eignen sich die beschriebenen Mischungen besonders. Darüber hinaus eignen sich die erfindungsgemäßen Mischungen besonders zum Kleben von Leder mit unterschiedlichen Sohlenmaterialien in der Schuhindustrie. Die erfindungsgemäßen Klebstoffzusammensetzungen können nach sämtlichen, für wäßrige Dispersionen bekannten Auftragstechniken appliziert werden, wie z.B. Spritzen, Streichen, Rakeln oder Gießen. Die folgenden Beispiele sollen die Erfindung erläutern. Alle Angaben sind hierbei als Gewichtsanteile bzw. Gew.-% zu verstehen.

Herstellung der Klebstoffdispersionen

Bei zweikomponentiger Verarbeitung wird durch Einrühren von emulgierbarem Isocyanat C eine Klebstoffzusammensetzung hergestellt.

Ermittlung der Wärmefestigkeiten von PVC-PVC-Verklebungen (Softening Point; SP)

2 cm breite Streifen eines Weich-PVC-Materials werden mit der Klebstoffdispersion in einer Schichtdikke von 0,1 mm bestrichen.

Nach einer Ablüftzeit von 1 Stunde werden die Klebstoffoberflächen durch Strahlungswärme innerhalb von 10 Sekunden auf eine Temperatur von 80°C gebracht. Anschließend werden die Klebestreifen so zusammengelegt, daß eine überlappende Fläche von 2 x 1 cm vorliegt. Die Prüfkörper werden dann 1 Minute mit einem Druck von 10 Kp/cm$^2$ gepreßt und anschließend 3 Tage bei Raumtemperatur gelagert.

Die Wärmefestigkeit wird in einem Zugscherversuch bestimmt. Hierbei wird der Prüfkörper einseitig mit einer Masse von 4 kg belastet. Nach 20 minütigem Tempern bei 40°C wird durch Erhöhen der Temperatur des Klebverbundes um 0,5°C je Minute die Temperatur ermittelt, bei der die Klebung versagt.

Mit den vorstehend beschriebenen Dispersionen werden PVC/PVC Verklebungen hergestellt,

PVC-Material: transparent, 4 mm dick, 30 % Dioctylphthalat als Weichmacher. Vor dem Aufbringen der Dispersion wurden die zu verklebenden Flächen gründlich gerauht (Schleifpapier der Körnung 80) und vom Schleifstaub befreit. Es wurde eine Naßklebstoffschicht von 0,1 mm auf die Substrate aufgebracht und 60 Minuten bei Raumtemperatur abgelüftet.

Ermittlung der Aktiviertemperatur der Klebstoffilme (MAT)

Auf einer Nora Gummi-Platte (200 x 60 mm) werden einkomponentig 0,1 mm dicke Schichten der Klebstoffzusammensetzungen aufgetragen und 1 Stunde bei Raumtemperatur, dann 24 Stunden im Klimaraum abgelüftet. Die Verklebung erfolgt durch Thermoaktivierung in einem Funck-Aktiviergerät (Typ A 1000). Dabei wird ein 10 mm breiter Streifen schockaktiviert und sofort über Kreuz auf einen zweiten Streifen gelegt, der nicht aktiviert worden ist. Die entstehende Klebfläche von 1 cm$^2$ wird mit einer Kissenpresse 30 sec lang mit einem Druck von 0,5 bar verpreßt. Beim Lösen der Verklebung wird die Filmkoaleszenz beurteilt. Eine ausreichende Aktivierung des Klebfilms ist dann erreicht, wenn eine nahezu vollständige (100 %ige) Filmkoaleszenz bei der Verklebung eintritt.

Die Aktivierzeit wird zwischen 1 und 10 Sekunden variiert; wobei mit zunehmender Aktivierzeit die Klebefilmtemperatur steigt.

Schälwiderstand PVC-PVC (SW)

Gerauhtes PVC-Material (90 x 30 mm) wird mit einer etwa 0,1 mm dicken Klebstoffschicht versehen. Danach lüftet der Film 1 Stunde bei Raumtemperatur ab. Anschließend wird mit dem Funck-Aktiviergerät 10 s schockaktiviert und die Klebstreifen mit 10 Kp/cm$^2$ verpreßt. Die Schälwiderstandsmessung erfolgt mittels einer handelsüblichen Zugprüfmaschine sofort bzw. 3 Tage nach der Verklebung.

Beispiele: (erfindungsgemäß)

Klebstoffmischungen bestehend aus:

Dispersion A) Acrylnitril-Butadien-Copolymerdispersion

A1: Perbunan-Latex 8239 (45 % ACN-Gehalt) FSG: 40 %, pH-Wert 10,5,
Viskosität: 20 mPas, mittlere Teilchengröße 80 nm

A2: Perbunan-Latex N 2818 (27 % ACN-Gehalt) FSG: 45 %, pH-Wert 10,5,
Viskosität: 25 mPas, mittlere Teilchengröße
210 nm

A3: Perbunan-Latex 3310 HD (32 % ACN-Gehalt) FSG; 40 %, pH-Wert 11,0,
Viskosität: 10 mPas, mittlere Teilchengröße 80 nm

A4: Perbunan-Latex 3415 M (33 % ACN-Gehalt) FSG: 47,5 %, pH-Wert 6,3,
Viskosität: 20 mPas, mittlere Teilchengröße 180 nm

A5: Perbunan-Latex 1519 (15 % ACN-Gehalt) FSG: 40 %, pH-Wert 7,0,
Viskosität; 30 mPas, mittlere Teilchengröße 150 nm

Dispersion B) Polyurethan-/Polyharnstoffdispersion hergestellt nach der DE-AS 1 495 745 aus einem Adipinsäure-Butandiol-Polyester, einer Isocyanatmischung, einem Diamin, welches Sulfonatgruppen enthält sowie einem Aminoalkohol. Der Feststoffgehalt der Dispersion betragt 50 Gew.-%, der pH-Wert 7,0, die Viskosität 250 mPas (Brookfield LVT Spdl. 2, 23°C) und die mittlere Teilchengröße 200 nm (Laserkorrelationsspektroskopie). Die Erweichungstemperatur nach der vorstehend beschriebenen TMA beträgt 45 bis 50°C.

Polyisocyanat C:
Desmodur DA, Bayer AG

Die Einsatzmengen an Dispersionen verstehen sich in der folgenden Tabelle als Gewichtsteile.

Die Klebstoffzusammensetzungen wurden durch Zusammengeben und anschließendem Rühren hergestellt. Die Zugabe des emulgierbaren Polyisocyanats (Desmodur DA, Bayer AG) zur Mischung der Dispersion erfolgte kurz vor der Beschichtung der Prüfkörper.

Als Vergleichsdispersionen diente handelsübliche Acylat und Ethylen-Vinylacetatdispersionen, die im Klebstoffbereich eingesetzt werden:

| | | |
|---|---|---|
| V1: | Acronal 7D | (Hersteller BASF) |
| V2: | Acronal 81 D | " |
| V3: | Acronal V 302 | " |
| V4: | Acronal V 205 | " |
| V5: | Vinnapas EP1 | (Hersteller: Wacker Chemie) |
| V6: | Vinnapas EV2 | " |
| V7: | Vinnapas ASO | " |

| Bsp. | Disp. A Gew.-Tle* | Disp. B Gew.-Tle* | MAT/s. | Schälfestigkeiten/ IV mm | | | | Wärmebeständigkeit | |
|---|---|---|---|---|---|---|---|---|---|
| | | | | 1 K-Sofort | 1 K 3Tage | 2 K**-Sofort | 2 K 3Tage | 1 K 3Tage | 2 K 3Tage |
| 1 | A1/50 | 50 | 6 | 4,5 | 12,0 | 3,5 | 9,5 | 61 | 105 |
| 2 | A2/50 | 50 | 6 | 4,4 | 8,9 | 4,4 | 10,4 | 61 | 110 |
| 3 | A3/50 | 50 | 6 | 3,8 | 5,8 | 3,8 | 9,2 | 58 | 105 |
| 4 | A4/50 | 50 | 6 | 4,5 | 9,8 | 4,0 | 10,3 | 57 | 99 |
| 5 | A5/50 | 50 | 6 | 4,7 | 9,0 | 3,8 | 9,8 | 60 | 105 |
| 6 | V1/50 | 50 | >10 | 1,4 | 2,7 | k. Fest. | k. Fest. | 51 | k. Fest. |
| 7 | V2/50 | 50 | 6 | 2,5 | 4,1 | 3,1 | 6,0 | 58 | 99 |
| 8 | V3/50 | 50 | 6 | 2,5 | 4,7 | 2,5 | 6,1 | 56 | 93 |
| 9 | V4/50 | 50 | 4 | 1,5 | 2,1 | 1,5 | 2,5 | 56 | 99 |
| 10 | V5/50 | 50 | 6 | 3,4 | 5,6 | 2,7 | 7,6 | 55 | 100 |
| 11 | V6/50 | 50 | 6 | 2,4 | 8,5 | 2,4 | 8,1 | 55 | 93 |
| 12 | V7/50 | 50 | 6 | 5,0 | 6,9 | 4,1 | 8,7 | 55 | 100 |

** 2 K-Anwendung: Zusatz von 3 Gew.-% Desmodur DA bezogen auf Dispersionsmischung
* Gew.-Teile bezogen auf den Feststoff in den Dispersionen

Aus den Beispielen der Tabelle folgt:

Die erfindungsgemäßen Mischungen von Polymerdispersionen (Bsp. 1 - 5) zeichnen sich im Unterschied zu den Vergleichsbeispielen dadurch aus, daß in allen Fällen Produkte mit hohen Sofortschälfestigkeiten, hohen Endschälfestigkeiten und hohen Wärmebeständigkeiten erhalten werden. Zwar gibt es innerhalb der Reihe der Vergleichsversuche einzelne Abmischungen, die bezüglich eines geprüften Parameters vergleich-

7

bar sind, jedoch zeigen diese Produkte Schwachen bei anderen Prüfungen (z.B. Bsp. 9, Bsp. 12). Das hohe gleichmäßige Klebwertniveau wird lediglich von den erfindungsgemäßen Mischungen erreicht.

**Patentansprüche**

1. Mischungen wäßriger Polymerdispersionen bestehend aus

A) einer 5 - 70 Gew.-% Feststoff enthaltender Dispersion eines Nitrilkautschuks (Dispersion A), dessen Feststoff eine Shore-A-Härte von 10 bis 70 aufweist, 80 bis 50 Gew.-% Butadien und/oder Isopren, 20 bis 50 Gew.-% Acrylnitril und/oder Methacrylnitril, 0 - 10 Gew.-% Styrol, $\alpha,\beta$-monoethylenisch ungesättigter Carbonsäuren und/oder deren Amide und/oder N-Methylolamide und/oder Derivate der Methylolamide,

B) einer 5 - 70 Gew.-% Feststoff enthaltender Dispersion eines Polyurethans und/oder Polyharnstoffes (Dispersion B), dessen Erweichungsbereich bei 40 bis 120 °C liegt, wobei das Mengenverhältnis der Dispersionen A:B im Bereich von 95:5 bis 5:95 Gew.-Teile, bezogen auf den Feststoffanteil der Dispersionen A + B liegt,

C) gegebenenfalls einer Polyisocyanatverbindung mit wenigstens zwei Isocyanatgruppen je Molekül, welche den Dispersionen zu 0,1 bis 20 Gew.-Teilen bezogen auf 100 Gew.-Teile der Mischung der Dispersion A und B, zugesetzt wird sowie

D) gegebenenfalls üblichen Zusatzstoffen.

2. Thermoaktivierbare Klebstoffilme erhältlich auf Basis einer Mischung gemäß Anspruch 1.

3. Verfahren zur Kaschierung von Thermoplast-Formteilen mit durch Wärmeeinwirkung weichgemachten Thermoplastfolien, dadurch gekennzeichnet, daß als thermoaktivierbare Klebstoffe solche nach Anspruch 2 verwendet werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,X | DATABASE WPI<br>Week 7909,<br>Derwent Publications Ltd., London, GB;<br>AN 79-16880B<br>& JP-A-54 008 686 (KOKOKU CHEM.IND. KK)<br>23. Januar 1979<br>* Zusammenfassung *<br>--- | 1-3 | C09J175/00<br>C09J109/04<br>C08G18/10<br>C09J7/00<br>//(C09J175/00,<br>109:04),<br>(C09J109/04,<br>175:00) |
| A | EP-A-0 444 259 (BAYER)<br>* Ansprüche 1-4,6,7 *<br>* Seite 4, Zeile 30 - Zeile 48 *<br>--- | 1 | |
| A | FR-A-2 386 581 (W.R. GRACE & CO.)<br>* Ansprüche 1-3,5 *<br>* Seite 8, Absatz 2 *<br>----- | 1 | |
| | | | **RECHERCHIERTE SACHGEBIETE (Int.Cl.5)**<br><br>C09J<br>C09D<br>C08L |

Der vorliegende Recherchenbericht wurde für alle Patentansprüche erstellt

| Recherchenort | Abschlußdatum der Recherche | Prüfer |
|---|---|---|
| DEN HAAG | 5. September 1994 | Van Puymbroeck, M |

EPO FORM 1503 03.82 (P04C03)